# EUROPEAN PATENT SPECIFICATION

(11) **EP 2 709 854 B1**
(45) Date of publication and mention of the grant of the patent: **21.01.2015**
(21) Application number: 12721773.5
(22) Date of filing: 16.05.2012
(51) Int. Cl.: B43K 23/008, B43K 24/08, B43K 29/00, B43K 7/00, G06F 3/0354, G06F 3/00

(54) **PEN**
STIFT
STYLO

(30) Priority: 18.05.2011 DE 202011100847 U; 14.07.2011 DE 202011103177 U
(43) Date of publication of application: 26.03.2014
(73) Proprietor: Stabilo International GmbH, 90562 Heroldsberg (DE)
(72) Inventor: ULLRICH, Johannes, 91154 Roth (DE); HECKER, Dieter, 90491 Nürnberg (DE)
(74) Representative: Leinweber & Zimmermann
(86) International application number: PCT/EP2012/002119
(87) International publication number: WO 2012/156090

(56) References cited:
- US-A1- 2006 239 761
- US-A1- 2008 219 749
- US-B1- 6 450 721

## Description

The invention concerns a pen with a cartridge for writing and/or drawing at a first working end.

There are also devices with touch sensitive screens, such as smartphones for example. Touch sensitive screens are normally controlled with a finger. Controlling the screen with the finger is difficult, particularly if the actual screen concerned or the field (soft key) to be touched for control with the finger is small. Faulty control may occur, if the finger covers not only the desired field, but also an adjacent field.

Therefore the invention is based on the problem of providing assistance for controlling a touch sensitive screen.

Documents US 2008/219749, US 6450721 & US 2006/239761 disclose pens according to the preamble of claim 1.

According to the invention the problem set is solved by a second working end on the pen, which is designed for controlling a touch sensitive screen by touching.

In this the invention starts from the knowledge that a pen is normally smaller, particularly thinner than a finger, for which reason it allows accurate control even with small fields of the screen to be touched for control. Therefore the invention lies in designing the pen as a tool or aid for controlling a touch sensitive screen.

According to the invention the second working end may be arranged in any way with reference to the first working end. According to the invention preferably both working ends are arranged opposite each other. In the case of a long pen both working ends are coaxial to each other for example.

Frequently the function of a touch sensitive screen is based on a galvanic and/or capacitive connection between the screen and the finger controlling it. In order to ensure this connection, even if the screen is not touched directly with the finger, but rather with the second working end, which is between the finger and the screen, according to claim 1 of the invention it is envisaged that a grip area for holding the pen when controlling a touch sensitive screen is electrically connected to the second working end. Through this the pen (also electrically) represents almost an extension of the finger, so that it makes no or little difference whether the finger touches the screen directly or touches the screen indirectly through the second working end.

According to claim 1 the invention the electrical connection between the grip area and the second working end stems from particles of a conductive substance, particularly carbon particles. Therefore there is a free choice of material, from which the relevant parts of the pen may be produced. The carbon particles will provide the electrical connection mentioned above in any case. They are embedded in the material indicated.

According to a further preferred embodiment of the invention it is envisaged that the pen has a casing, which is made completely or partly of plastic. The use of plastic for the casing gives many design possibilities for the pen with reference to the shape, surface finish, surface design, colour, etc., for example. Plastic is also a comparatively cheap material, which may be worked and processed just as cheaply. Embedding carbon particles is also cheap and easy.

According to a further preferred embodiment of the invention it is envisaged that the second working end is pliable, particularly elastically pliable. In other words according to this embodiment it is designed almost like a cushion. Pliability is used particularly to protect against damage to the screen, if the pressure is too great. A pliable or soft area on the second working end will always (to some extent) give way and therefore prevent damage to the screen.

For further prevention of any damage to the touch sensitive screen because of too great a pressure according to the invention preferably it may be envisaged that the second working end may move axially with reference to a pen casing, particularly against spring preloading.

In this according to the invention also preferably the preload force may be set at at least two different values. Therefore a choice may be made between "hard" and "soft" suspension for example. Through this the user of the pen may configure the pen according to his preferences and inclinations.

According to a particularly preferred embodiment of the invention it is envisaged that the cartridge may be extended and retracted and the preload has a different value when the cartridge is extended from when the cartridge is retracted.

Therefore with this design the preload force is connected to the operating state of the cartridge. The "hard" suspension goes with the retracted cartridge state, whereas in the extended cartridge state a rather "soft" suspension acts on the second working end for example. Manageability of the pen is made easier through this overall. A user need only retract or extend the cartridge depending on whether he prefers "hard" or "soft" suspension.

According to a particularly preferred embodiment of the invention the grip area for holding the pen for controlling a touch sensitive screen mentioned above has at least one recessed grip. In addition to this recessed grip in particular a recessed grip may be envisaged, which is used to hold the pen when using the first working end (writing, drawing).

There is a certain symmetry to the pen with this design insofar as it has a first recessed grip for holding during normal operation (writing, drawing) and a second recessed grip for use when controlling a touch sensitive screen.

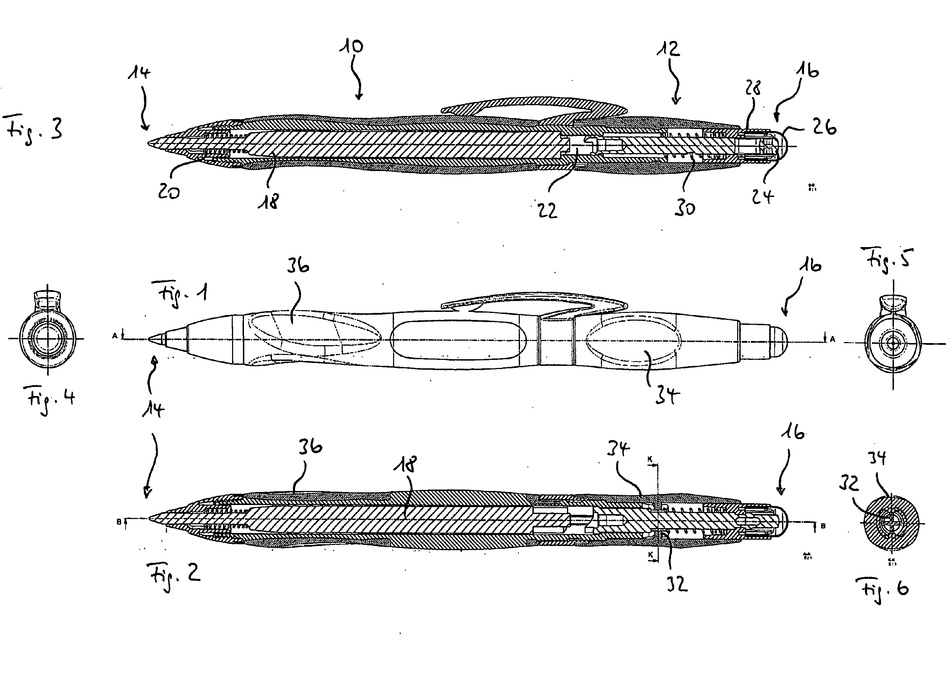

The invention is explained in more detail below using a preferred embodiment with reference to the enclosed drawing. It shows
- Figure 1: a diagrammatic side view of a pen according to a preferred embodiment of the invention,
- Figure 2: a longitudinal section according to arrow A in figure 1,
- Figure 3: a longitudinal section according to arrow B in figure 2,
- Figure 4: an axial view of the pen according to figure 1,
- Figure 5: an axial view of the pen according to figure 1 opposite the view according to figure 4,
- Figure 6: a cross sectional view of the pen according to figure 1 according to arrow K in figure 2 and
- Figure 7: the spring characteristic of a spring used in the pen.

The pen illustrated in the drawing includes a casing, which may be divided into two areas (asymmetrically), a writing area 10 illustrated on the left in the drawing and an input area 12 illustrated on the right in the drawing. There is a first working end 14 in the writing area 10, whilst there is a second working end 16 in the input area 12. At the first working end 14 there is the point of a cartridge 18, which may take up two positions, an extended position, as shown in the drawing, and a retracted position, in which it is drawn into the casing with reference to the position illustrated in the drawing. A spring 20 is used for preloading the cartridge 18 in the second position indicated. A catch mechanism, which is denoted with the reference number 22, is used for locking in the extended position. It is shown faintly in the drawing, because it is generally known from pen technology. Therefore it is not explained in more detail here either.

A pusher 24, which may move axially with reference to the casing 10, 12, is used to activate the catch mechanism or for retracting or extending the cartridge 18. If it is moved in the axial direction by pushing, the cartridge changes its position in the casing, that is to say it extends or retracts.

A hollow, (elastically) pliable cap 26 arches over the pusher 24. The cap 26 is held by a mount 28, which is supported on a spring 30 and is preloaded by means of the spring on the right in the drawing. The spring 30 is supported on a rest 32, which is made in one piece with the input area 12. The input area 12 has recessed grips, one of which is denoted with the reference number 34 as an example. The writing area also has recessed grips, one of which is denoted with the reference number 36 again as an example.

The cap 26, the mount 28 and the input area 12 including rest 32 are made of plastic, in which carbon particles are embedded, so that there is electrical conductivity. The spring 30 is made of metal or another electrically conductive material. Therefore the cap 26 is electrically connected to the recessed grip 34 overall.

In the operating state illustrated in the drawing, in which the cartridge 18 is extended, the preload force of the spring 30 acts on the cap 26 or the pusher 24 when the pusher is operated as far as a pressure point, at which the catch mechanism 22 is activated. However, if the cartridge 18 is retracted, the spring 20, which has a higher spring constant than the spring 30, also or alternatively acts on the cap 26 and the pusher 24. A further spring constant to be mentioned here is that of the cap 26, which acts like a cushion, but is already deformed by gentle pressure, until it lies on the pusher 24.

With the embodiment illustrated in the drawing conditions are as follows:
1. The cartridge is retracted. Then the following applies:
   After the cap 26 is pressed in by 2 mm and is lying on the pusher 24, a spring force of 3.1 N acts in a first embodiment and a force of 4 N in a second embodiment. With further axial movement of the cap 26 with the pusher 24 a force of up to 7.9 N in the first embodiment and 10.8 N in the second embodiment may then be exercised, until the catch mechanism 22 locks the cartridge 18 in the extended position.
2. The cartridge is extended. Then the following applies:
   The cap 26 is pressed in by 2 mm when activated, so that it is lying on the pusher 24. Now a spring force of 1.3 N in the first embodiment and 2.7 N in the second embodiment acts against further movement of the cap 26 with the pusher 24. If it is moved further, a force of 7.7 N in the first embodiment and 10. 7 N in the second embodiment may be exercised, until the catch mechanism 22 responds and the cartridge 18 is locked again.

Therefore by retracting and extending the cartridge 18 the preload force acting on the cap 26 with the pusher 24 against an axial movement with reference to the input area 12 may be set at different values and therefore chosen according to the preference of the user.

Because of the suspension of the cap 26 with the pusher 24 described above in detail together with the cushion type (elastic) pliability of the cap 26 there is no danger of damage to the screen when using the second working end 16 to activate a touch sensitive screen. Also because of the pliability of the cap 26 that area, with which the working end 16 is lying on the screen, is sufficiently large to simulate a finger on the screen and to produce the necessary capacitive/galvanic connection.

As the cap 26 is also electrically connected to the recessed grip 34 through the mount 28, the spring 30 and the rest 32, the second working end 16 may be used like an extension of the finger lying on the recessed grip 34 when using a touch sensitive screen. However, in this the second working end 16 is smaller than the effective area in comparison with a finger, for which reason the screen may be used with greater accuracy.

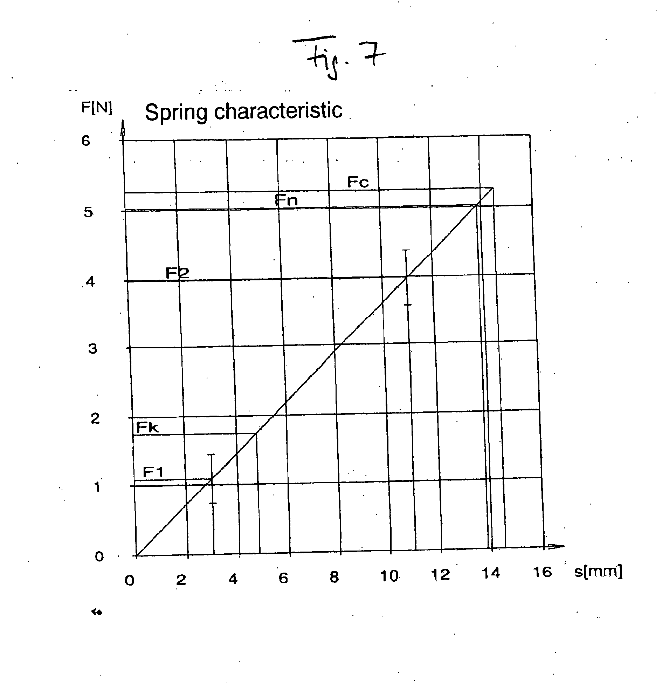

We refer to figure 7, which reflects the characteristics of an example for the spring 30, for further explanation. In the embodiment shown and described the spring 30 has an initial length of 18 mm in the first embodiment and 22 mm in the second embodiment and is preloaded at a length of 15 mm in the fitted state.

## Claims

1. Pen with a cartridge (18) for writing and/or drawing at a first working end (14), and a second working end (16), which is designed for controlling a touch sensitive screen by touching, **characterized in that**
a grip area (34) for holding the pen when controlling a touch sensitive screen is electrically connected to a second working end (16), and the electrical connection between the grip area (34) and the second working end (16) stems from particles of a conductive substance, particularly carbon particles.

2. Pen according to claim 1, **characterised in that** both working ends (14, 16) are opposite each other.

3. Pen according to one of the previous claims, **characterised in that** it has a casing (10, 12), which is made completely or partly of plastic.

4. Pen according to one of the previous claims, **characterised in that** the second working end (16) is pliable.

5. Pen according to one of the previous claims, **characterised in that** the second working end (16) may move axially with reference to a pen casing (10, 12), particularly against spring preloading.

6. Pen according to claim 5, **characterised in that** the preload force may be set at at least two different values.

7. Pen according to claim 5 or 6, **characterised in that** the cartridge (18) may be extended and retracted and the preload force when the cartridge is extended has a different value from when the cartridge is retracted.

8. Pen according to one of the previous claims, **characterised in that** the grip area (34) has at least one recessed grip.

## Patentansprüche

1. Stift mit einer Mine (18) zum Schreiben und/oder Zeichnen an einem ersten Arbeitsende (14), und mit einem zweiten Arbeitsende (16), das ausgelegt ist zum Steuern eines berührungsempfindlichen Schirms durch Berühren, **dadurch gekennzeichnet, dass**
ein Greifbereich (34) zum Halten des Stifts beim Steuern eines berührungsempfindlichen Schirms elektrisch mit einem zweiten Arbeitsende (16) verbunden ist, und die elektrische Verbindung zwischen dem Greifbereich (34) und dem zweiten Arbeitsende (16) von Teilchen einer leitenden Substanz, insbesondere Kohleteilchen, herrührt.

2. Stift nach Anspruch 1, **dadurch gekennzeichnet, dass** beide Arbeitsenden (14, 16) einander gegenüberliegen.

3. Stift nach einem der vorstehenden Ansprüche, **dadurch gekennzeichnet, dass** er ein Gehäuse (10, 12) aufweist, das ganz oder teilweise aus Kunststoff gefertigt ist.

4. Stift nach einem der vorstehenden Ansprüche, **dadurch gekennzeichnet, dass** das zweite Arbeitsende (16) biegsam ist.

5. Stift nach einem der vorstehenden Ansprüche, **dadurch gekennzeichnet, dass** sich das zweite Arbeitsende (16) axial in Bezug auf ein Stiftgehäuse (10, 12), insbesondere gegen Federvorbelastung, bewegen kann.

6. Stift nach Anspruch 5, **dadurch gekennzeichnet, dass** die Vorbelastungskraft auf zumindest zwei unterschiedliche Werte eingestellt werden kann.

7. Stift nach Anspruch 5 oder 6, **dadurch gekennzeichnet, dass** die Mine (18) vorgeschoben und zurückgezogen werden kann und die Vorbelastungskraft, wenn die Mine vorgeschoben ist, einen anderen Wert aufweist, als wenn die Mine zurückgezogen ist.

8. Stift nach einem der vorstehenden Ansprüche, **dadurch gekennzeichnet, dass** der Greifbereich (34) zumindest eine Greifmulde besitzt.

## Revendications

1. Stylo comportant une mine (18) permettant d'écrire et/ou de dessiner à une première extrémité opérationnelle (14), et une seconde extrémité opérationnelle (16) qui est conçue pour contrôler un écran tactile par contact, **caractérisé en ce que**
une zone de préhension (34) permettant de tenir le stylo lors du contrôle de l'écran tactile est raccordée par voie électrique à la seconde extrémité opérationnelle (16), et le raccord électrique entre la zone de préhension (34) et la seconde extrémité opérationnelle (16) s'effectue par le biais de particules d'une substance conductrice, notamment de particules de carbone.

2. Stylo selon la revendication 1, **caractérisé en ce que** les deux extrémités opérationnelles (14, 16) sont opposées l'une à l'autre.

3. Stylo selon l'une des revendications précédentes, **caractérisé en ce qu'**il présente une enveloppe (10, 12) réalisée complètement ou partiellement en plastique.

4. Stylo selon l'une des revendications précédentes, **caractérisé en ce que** la seconde extrémité opérationnelle (16) est souple.

5. Stylo selon l'une des revendications précédentes, **caractérisé en ce que** la seconde extrémité opérationnelle (16) est axialement déplaçable par rapport à une enveloppe (10, 12) du stylo, notamment sous la sollicitation d'un ressort.

6. Stylo selon la revendication 5, **caractérisé en ce que** la force du ressort peut être réglée à au moins deux valeurs différentes.

7. Stylo selon la revendication 5 ou 6, **caractérisé en ce que** la mine (18) peut être déployée et rétractée et la force du ressort existant lorsque la mine est déployée est d'une valeur différente de celle existant lorsque la mine est rétractée.

8. Stylo selon l'une des revendications précédentes, **caractérisé en ce que** la zone de préhension (34) présente au moins un creux de préhension.
